# EUROPÄISCHE PATENTSCHRIFT

(11) **EP 0 496 974 B1**
(45) Veröffentlichungstag und Bekanntmachung des Hinweises auf die Patenterteilung: **28.09.1994**
(21) Anmeldenummer: 91120475.8
(22) Anmeldetag: 29.11.1991
(51) Int. Cl.: B64D 9/00, B64C 1/20

(54) **Riegelelement**
Clamping device
Element de verrouillage

(30) Priorität: 26.01.1991 DE 4102274
(43) Veröffentlichungstag der Anmeldung: 05.08.1992
(73) Patentinhaber: Daimler-Benz Aerospace Airbus Gesellschaft mit beschränkter Haftung, 21129 Hamburg (DE)
(72) Erfinder: Vogg, Günter, W-2800 Bremen (DE); Wieck, Jürgen, W-2800 Bremen (DE)
(74) Vertreter: Hansmann, Dierk, Dipl.-Ing.

(56) Entgegenhaltungen:
- DE-A- 3 107 745
- FR-A- 1 360 290

## Beschreibung

Die Erfindung betrifft ein Riegelelement zur Arretierung von Frachtstücken in einem Frachtladesystem für Luftfahrzeuge, das an in Flugzeuglängsrichtung im Flugzeugboden verlaufenden, mit einem Lochraster versehenen Schienen lösbar gehaltert ist und bei dem wenigstens ein Arretierungselement in einem Rahmen angeordnet ist, der über Ansätze im Lochraster zweier im Abstand voneinander befindlicher Schienen festlegbar ist, wobei der Rahmen verschieblich gegenüber den Ansätzen geführt und über Rastelement in unterschiedlichen, definierten Positionen kraftschlüssig mit diesen in Eingriff bringbar ist.

Ein derartiges Riegelelement ist aus der Druckschrift FR-A-1 360 290 bekanntgeworden. Das bekannte Riegelelement dient dazu, an ihre jeweilige Stauposition im Frachtraum eines Transportflugzeuges gebrachte und für einen Fallschirmabwurf vorgesehene Frachtstücke, wie Paletten oder dergleichen, gegen eine Bewegung in Flugzeuglängsrichtung zu sichern und sie erst im Moment des Abwurfes freizugeben. Zu diesem Zweck ist das bekannte Riegelelement zwischen die in der Längsrichtung des Flugzeuges verlaufenden Schienen über federbelastete Bolzen einsteckbar, die seitlich aus dem Riegelelement herausragen und die in entsprechende Aufnahmebohrungen greifen, die in regelmäßigen Abständen in den einander gegenüberliegenden Flächen der Schienen angeordnet sind. Der Rahmen, der das aus zwei aus der Ebene des Frachtraumbodens herausschwenkbaren Platten bestehende Arretierungselement trägt, ist dabei gegenüber den federbelasteten Bolzen in Flugzeuglängsrichtung verschieblich geführt und kann mittels der Rastelemente in unterschiedlichen Positionen fixiert werden, um auf diese Weise eine Anpassung an verschieden große Frachtstücke zu ermöglichen.

Während dieses bekannte Riegelelement sich nur dazu eignet, die in einem Flugzeug zu befördernden Frachtstücke gegen eine unbeabsichtigte Bewegung in Flugzeuglängsrichtung zu sichern, werden in modernen Oberdeck-Frachtladesystemen von vom Passagier- auf den Frachtbetrieb umrüstbaren Verkehrsflugzeugen auch Riegelelemente eingesetzt, die die zu befördernden Frachtstücke, vorallem Paletten und Container, auch in vertikaler und in lateraler Richtung in ihrer Stauposition fixieren und die als sogenannte YZ-Riegel bezeichnet werden. Ein derartiges Riegelelement ist aus der Druckschrift DE-A-31 07 745 bekanntgeworden.

Bei diesen bekannten Riegelelementen ist in einem Rahmen, der an den im Flugzeugboden verlaufenden Sitzschienenprofilen befestigbar ist, ein in der Querrichtung des Flugzeuges wirkender Riegelhaken gehaltert, der über entsprechende Vorsprünge des Frachtstückes greift und diese dadurch gegen Bewegungen nach oben und in Querrichtung des Flugzeuges sichert.

Sind nun, insbesondere bei genormten Frachtcontainern bzw. -paletten, die Bereiche des Frachtstückes, an denen der Riegelhaken angreift, als Aussparungen, sogenannte Verriegelungstaschen, ausgebildet, in die der Riegelhaken hineingreift, so kann auf diese Weise neben der Arretierung in vertikaler und in lateraler Richtung das Frachtstück zugleich auch gegen Bewegungen in Längsrichtung des Flugzeuges, d.h. in X-Richtung, gesichert werden. Hierbei ergibt sich jedoch das Problem, daß die Bereiche an den Frachtstücken, mit denen die Riegelhaken in Eingriff gebracht werden sollen, eine andere Rasterteilung aufweisen können als die Sitzschienenprofile, an denen diese Riegelelemente in regelmäßigen Abständen befestigt werden.

Aufgabe der Erfindung ist es, ein Riegelelement der eingangs genannten Art so auszubilden, daß es in einem mit Sitzschienen ausgerüsteten Oberdeck-Laderaum eines vom Passagier- auf den Frachtbetrieb umrüstbaren Verkehrsflugzeuges eine zuverlässige Fixierung unterschiedlich großer Frachtstücke in ihrer jeweiligen Stauposition gegenüber Bewegungen in allen drei Koordinatenrichtungen gewährleistet.

Die Erfindung löst diese Aufgabe durch ein Riegelelement mit den kennzeichnenden Merkmalen des Patentanspruches 1.

Vorteilhafte Weiterbildungen, die vor allem eine möglichst vielseitige Verwendbarkeit des erfindungsgemäßen Riegelelementes zum Ziel haben, sind in den weiteren Ansprüchen angegeben. Die Riegelelemente nach der Erfindung können dabei entweder in einheitlicher Form oder in unterschiedlichen Ausführungen in einem Frachtladesystem eingesetzt werden. Die Riegelhaken des erfindungsgemäßen Riegelelementes können, je nach dem Einsatzort und den speziellen Anforderungen, sowohl feststehend als auch unter das Niveau der Frachtförderebene verschwenkbar ausgebildet sein und als Einfach, Doppel- oder Mehrfachriegel bzw. in beliebigen Kombinationen aufgebaut sein.

Im folgenden soll die Erfindung anhand der Zeichnung näher erläutert werden. Es zeigen:
- Fig. 1: einen Ausschnitt aus einem Oberdeck-Frachtladesystem eines Verkehrsflugzeuges in Draufsicht,
- Fig. 2, 3 und 4: Detaildarstellungen des in Fig. 1 gekennzeichneten Bereichs in drei verschiedenen Ansichten,
- Fig. 5: Detaildarstellungen der in Fig. 3 gekennzeichneten Bereiche,
- Fig. 6: eine Verriegelungseinheit in perspektivischer Explosionsdarstellung,
- Fig. 7 und 8: jeweils drei verschiedene Positionen der in Fig. 6 gezeigten Anordnung,
- Fig. 9: die in Fig. 6 gezeigte Anordnung, von unten betrachtet, in verriegelter und entriegelter Stellung und schließlich
- Fig. 10 bis 12: verschiedene Anordnungen von Riegelelementen.

In den Figuren sind gleiche Bauteile mit den gleichen Bezugszeichen versehen.

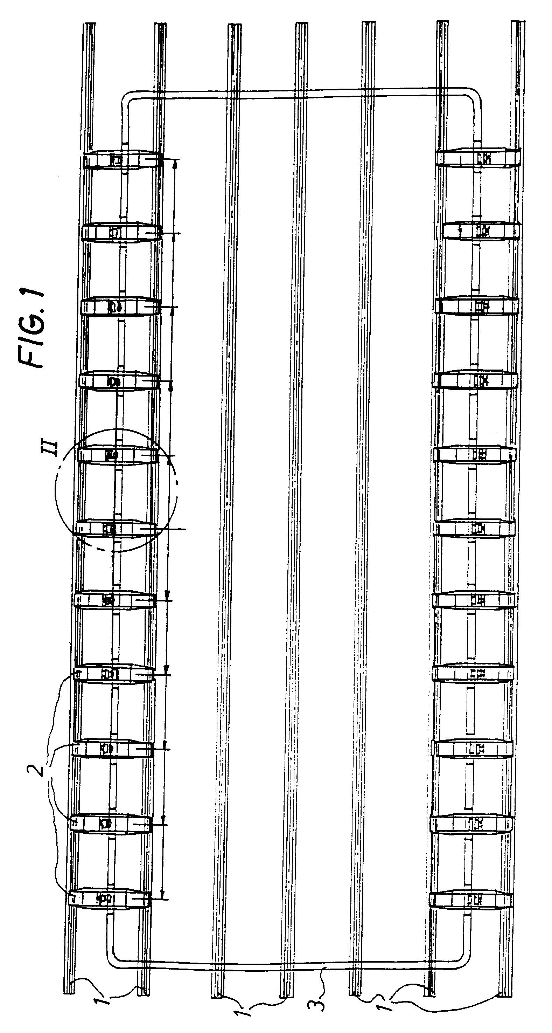

Der in Fig. 1 dargestellte Ausschnitt eines Oberdeck-Frachtladesystems in einem vom Passagier- auf den Frachtbetrieb umrüstbaren Großraum-Verkehrsflugzeug zeigt ein Arrangement von in gleichmäßigen Abständen in Flugzeuglängsrichtung, d.h. in X-Richtung, verlaufenden Sitzschienen 1, die in den Boden des Oberdeck-Fracht- bzw. Passagierraumes eingelassen sind.

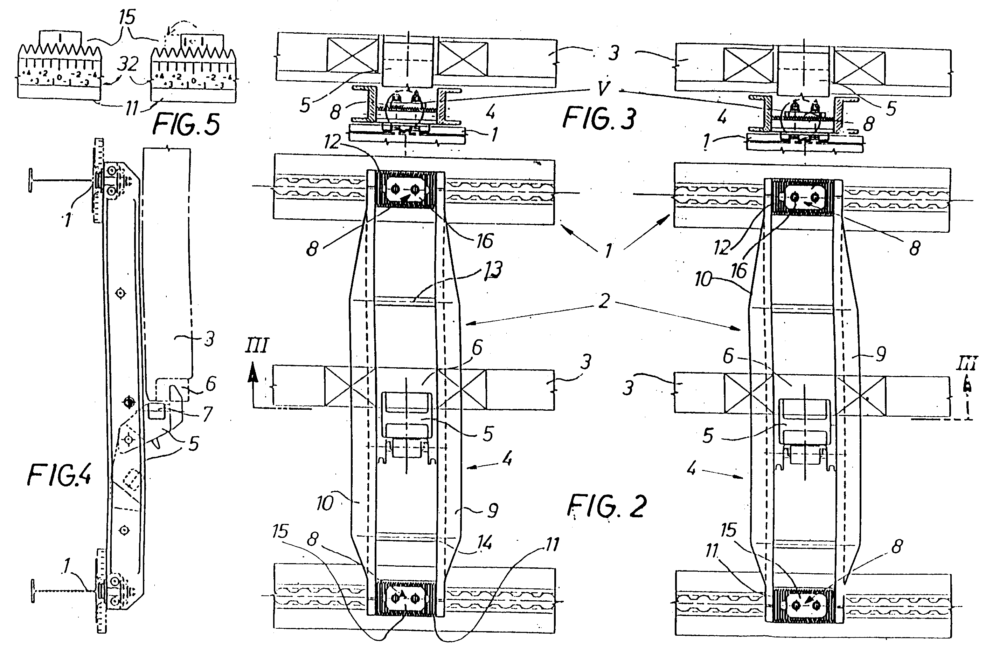

Die Sitzschienen 1, deren Profil in der in Fig. 4 gezeigten Querschnittdarstellung erkennbar ist, sind auf der Oberseite geschlitzt und mit einem in Fig. 2 erkennbaren Lochraster versehen, bei dem die kreisförmigen Ausschnitte einen Abstand von 2,54 Zentimetern (einem Zoll) voneinander aufweisen. An diesen ist eine Vielzahl gleichartig aufgebauter Riegelelemente 2 befestigt, die so angeordnet sind, daß sie zur Fixierung einer sogenannten 20-Fuß-Frachtpalette 3 dienen, deren Umrisse mit in die Darstellung in Fig. 1 eingezeichnet sind. Die Riegelelemente 2, die an jeweils zwei in Querrichtung des Flugzeuges (Y-Richtung) benachbarten Sitzschienen 1 befestigt sind, weisen in X-Richtung einen Abstand von etwa 51 Zentimetern (20 1/8 Zoll) voneinander auf. Die Riegelelemente 2 greifen in Verriegelungstaschen, die in gleichmäßigen Abständen in der Frachtpalette 3 angeordnet sind.

Der Aufbau der Riegelelemente 2 ist am Beispiel der beiden besonders gekennzeichneten Riegelelemente in den Figuren 2 bis 5 verdeutlicht. Sämtliche Riegelelemente 2 sind im Fall des hier beschriebenen Ausführungsbeispiels identisch aufgebaut, deshalb wurden bei den beiden in den Figuren 2 bis 5 dargestellten Riegelelementen die gleichen Bezugszeichen gewählt.

Die Riegelelemente 2 bestehen jeweils aus einem Rahmen oder einer Traverse 4, die einen schwenkbar gelagerten Riegelhaken 5 trägt. Der Riegelhaken 5 ist in Förderrichtung, d.h. in Flugzeuglängsrichtung, von den Frachtstücken überrollbar, wobei, wie in Fig. 4 angedeutet, dieser Riegelhaken vollständig in die Traverse 4 abklappbar ist. In der aufgerichteten Arretierposition greift der Riegelhaken 5 mit einer Nase in eine Verriegelungstasche 6 der Frachtpalette 3. Die Verriegelungstasche 6 ist dabei geringfügig breiter als die Nase des Riegelhakens 5. Eine Rolle 7 am Riegelhaken 5 dient als Anschlag in Y-Richtung und zur leichteren Führung in X-Richtung.

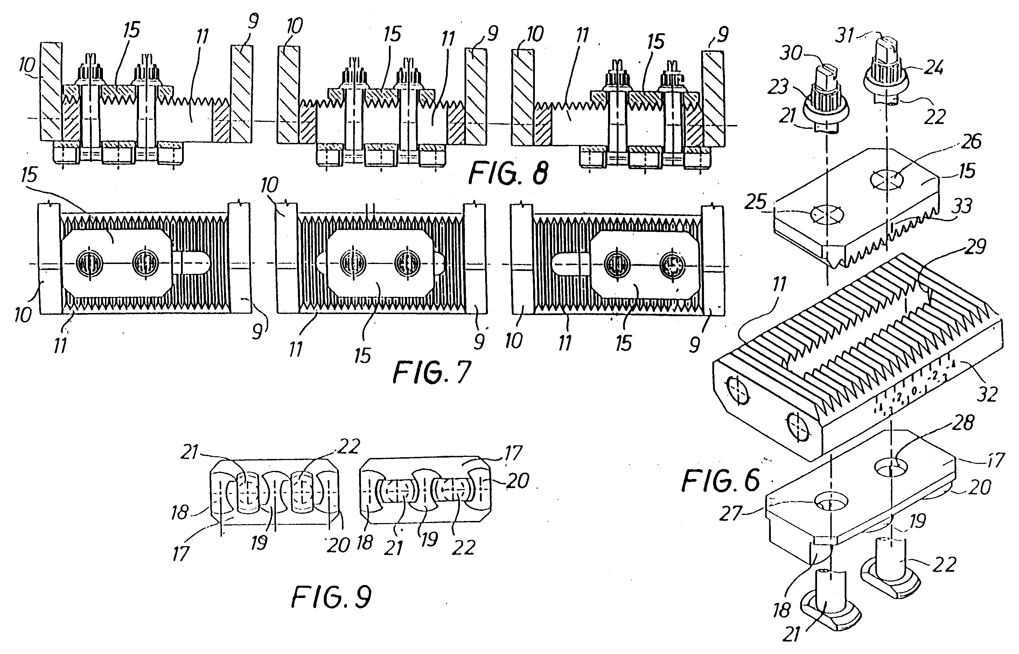

Die Traversen 4 sind über Verriegelungseinheiten 8 an den Sitzschienen 1 arretierbar, wobei über eine Rastverzahnung eine definierte Verstellbarkeit der Position der Traversen 4 in X-Richtung in bezug auf die in Abständen von jeweils 50,8 bzw. 53,34 Zentimetern (20 bzw. 21 Zoll) vorgesehene Grundposition der Riegelelemente 2, die durch das 2,54 Zentimeter (1-Zoll)-Lochraster der Sitzschienenprofile festgelegt ist, gegeben ist. So beträgt der exakte Abstand der beiden in den Figuren 2 bis 4 dargestellten Riegelelemente 2 51 Zentimeter (20 1/8 Zoll), wobei, wie in Fig. 5 schematisch gezeigt, die in der Fig. 2 rechte Traverse um 0,32 Zentimeter (1/8 Zoll) gegenüber dem 50,8 Zentimeter (20-Zoll)-Grundraster nach rechts versetzt angeordnet ist. Fig. 5 gibt dabei für die beiden in Fig. 2 bzw., in Draufsicht, in Fig. 3 dargestellten Riegelelemente 2 jeweils eine Einstell-Skala wieder, die in den in Fig. 3 mit V gekennzeichneten Bereichen auf der Außenseite der Traverse 4 sowie der Verriegelungseinheiten angebracht ist. Dies ist in Fig. 6 noch einmal ausführlich dargestellt.

Wie weiterhin aus Fig. 2 hervorgeht, besteht jede Traverse 4 aus zwei Seitenteilen 9 und 10, zwei diese Seitenteile 9 und 10 miteinander verbindenden Platten 11 und 12 sowie zwei Verstrebungen 13 und 14. Die Platten 11 und 12 sind, entsprechend der Darstellung in Fig. 6, auf der Oberseite mit einer Zahnung im Abstand von 0,32 Zentimetern (1/8 Zoll) versehen und dienen als Justierplatten zur kraftschlüssigen Positionierung der Traverse 4.

Die Justierplatten 11 und 12 wirken zusammen mit Festplatten 15 bzw. 16, die auf ihrer Unterseite mit einer Zahnung versehen sind, die in Form und Abstand derjenigen der Justierplatten 11 und 12 entspricht, so daß zwischen diesen Justierplatten 11 bzw. 12 und der jeweils zugeordneten Feststellplatte 15 bzw. 16 eine form- und kraftschlüssige Verbindung herstellbar ist. Vervollständigt wird die Verriegelungseinheit 8 durch eine Verriegelungsplatte 17, die an der Unterseite der Justierplatte 11 anliegt und die drei zylinderförmige Ansätze 18, 19 und 20 trägt, deren Durchmesser und Abstand dem Lochprofil der Sitzschienen 1 angepaßt ist, sowie durch zwei sogenannte Z-Schrauben 21 und 22, die als Verriegelungselemente dienen und die mit Muttern 23 und 24 versehen sind. Die Z-Schrauben 21 und 22 greifen durch entsprechende Bohrungen 25 bis 29 in der Feststellplatte 15 bzw. in der Verriegelungsplatte 17 sowie durch eine langlochartige Ausnehmung 29 in der Justierplatte 11. Die Köpfe der Z-Schrauben 21 und 22 sind, wie in den Figuren 6 und 9 erkennbar, an zwei gegenüberliegenden Seiten ihres Umfanges bis auf die Stärke des Schraubenschaftes abgearbeitet, so daß sie die in Fig. 9 erkennbare angenähert, rechteckförmige Grundfläche aufweisen. Mit den abgerundeten Schmalseiten sind diese Köpfe durch Verdrehen der Z-Schrauben 21 und 22 in entsprechend geformte Ausnehmungen der Ansätze 18 bis 20 bewegbar, wobei die Ansätze 18 bis 20 zugleich die Schwenkbewegung der Köpfe und damit der Z-Schrauben 21 und 22 auf etwa 90 Grad begrenzen. Das Verdrehen der Z-Schrauben 21 und 22 erfolgt über Schlitze 30 bzw. 31, die jeweils am gewindeseitigen, verjüngten Ende der Z-Schrauben 21 und 22 angebracht sind. Diese Schlitze 30 und 31 dienen gleichzeitig zur Anzeige der Position der Z-Schrauben 21 und 22, um auf diese Weise eine Lagekontrolle zu gewährleisten.

Wie weiterhin aus Fig. 6 ersichtlich ist, tragen die Justierplatten 11 bzw. 12 auf ihrer Außenfläche skalenartige Markierungen 32, die zusammen mit einem Markierungsstrich 33 auf der Außenfläche der zugehörigen Feststellplatte 15 bzw. 16 die Position der Justierplatte 11 bzw. 12 und damit der Traverse 4 in bezug auf die durch die Einbaulage der Verriegelungseinheit 8 in den Sitzschienen 1 festgelegte Grundposition anzeigen, wie dies auch in Fig. 5 gezeigt ist. In den Figuren 7 und 8 sind noch einmal zur Veranschaulichung die neutrale Mittelposition sowie die beiden möglichen Extrempositionen der Traverse 4 in bezug auf diese Grundposition gezeigt. Die Justierplatte 11 und damit auch die Traverse 4 bzw. das gesamte Riegelelement 2 sind, wie aus diesen Figuren ersichtlich, bei dem hier gezeigten Ausführungsbeispiel der Erfindung um maximal 1,27 Zentimeter (4 x 1/8 Zoll) in jeder Richtung verstellbar.

Da die Rasterteilung in diesem Fall 0,32 Zentimeter (1/8 Zoll) beträgt, läßt sich mit Hilfe dieser Regelelemente 2 die in Fig. 1 gezeigte Anordnung realisieren, bei der über eine Gesamtstrecke von 511,2 Zentimetern (201,25 Zoll = 10 x 20 1/8 Zoll) insgesamt 11 derartige Riegelelemente in gleichmäßigen Abständen angeordnet sind. Die Einstellung jedes dieser Riegelelemente ist dabei von außen auf der jeweiligen Einstell-Skala leicht ablesbar.

Die in Fig. 6 gezeigte Kombination aus Justierplatte 11, Feststellplatte 15, Verriegelungsplatte 17 sowie Z-Schrauben 21 und 22 eignet sich dabei insbesondere auch für eine Nach- bzw. Umrüstung von bereits im Einsatz befindlichen Riegelelementen, indem diese einfach anstelle der vorhandenen Verbindungs- und Verriegelungskomponenten in die entsprechenden Traversen eingebaut werden. In den Traversen können dabei entweder, wie in dem vorstehend beschriebenen Ausführungsbeispiel, Einfach-Riegelhaken eingebaut sein, es können aber, ohne den Rahmen der Erfindung zu verlassen, auch Doppel- oder Mehrfachriegel vorgesehen sein.

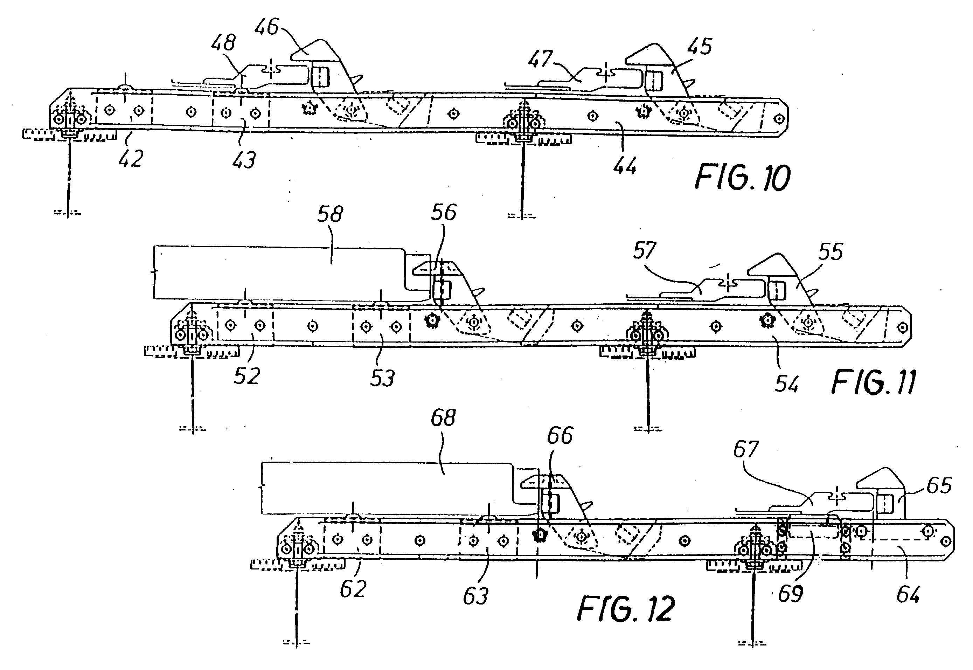

In den Figuren 10 bis 12 sind drei verschiedene Anordnungen gezeigt, in denen jeweils in einer Traverse 44, 54 bzw. 64 feststehende YZ-Riegelhaken 65, abklappbare YZ-Riegelhaken 45, 46 und 55 sowie abklappbare XYZ-Riegelhaken 56 und 66 in unterschiedlichen Kombinationen angeordnet sind, die der Arretierung verschiedener Frachtstücke 47, 48, 57, 58, 67 und 68 dienen. In die Traversen 44, 54 und 64 sind zur Unterstützung der Förderbewegung der Frachtstücke noch zusätzliche Kugelelemente 42 und 43, 52 und 53 bzw. 62 und 63 bzw. auch Tragrollen 69 eingebaut.

Die Justierung und der Einbau aller vorstehend beschriebenen Riegelelemente erfolgt jeweils auf die gleiche Weise. Zunächst werden die Z-Schrauben 21 und 22 so weit gelöst, daß die einzelnen Zähne der Rastverzahnung zwischen der Justierplatte 11 und der Feststellplatte 15 außer Eingriff gelangen und beide Platten gegeneinander in Richtung der langlochartigen Ausnehmung 29 bewegbar sind. Nachdem die gewünschte Einstellposition erreicht ist, werden die Z-Schrauben so weit angezogen, daß ein unbeabsichtigtes Verschieben in eine andere Rastposition nicht mehr möglich ist. Dann werden die Z-Schrauben 21 und 22 über die Schlitze 30 und 31 in die Entriegelungsposition gedreht, in der die abgeflachten Seiten der Köpfe dieser Schrauben parallel zur Längsseite der Verriegelungsplatte 17 liegen, wie dies im rechten Teil der Fig. 9 dargestellt ist. In dieser Position läßt sich das Riegelelement 2 in das Profile der Sitzschienen 1 einstecken. Durch anschließendes Verdrehen der Z-Schrauben um 90 Grad nehmen die Schraubenköpfe ihre im linken Teil der Fig. 9 gezeigte Position ein, in der sie unter das Sitzschienenprofil greifen.

In der nunmehr erreichten Verriegelungsposition werden die Köpfe der Z-Schrauben 21 und 22 durch Anziehen der Muttern 23 und 24 von Innen gegen das Sitzschienenprofil gepreßt, wodurch das gesamte Riegelelement 2 festgelegt ist.

## Patentansprüche

1. Riegelelement (2) zur Arretierung von Frachtstücken in einem Frachtladesystem für Luftfahrzeuge, das an in Flugzeuglängsrichtung im Flugzeugboden verlaufenden, mit einem Lochraster versehenen Schienen (1) lösbar gehaltert ist und bei dem wenigstens ein Arretierungselement (5) in einem Rahmen (4) angeordnet ist, der über Ansätze (18-20) im Lochraster zweier im Abstand voneinander befindlicher Schienen (1) festlegbar ist, wobei der Rahmen (4) verschieblich gegenüber den Ansätzen (18-20) geführt und über Rastelemente (11,12,15,16) in unterschiedlichen, definierten Positionen kraftschlüssig mit diesen in Eingriff bringbar ist, dadurch gekennzeichnet, daß die Arretierungselemente als Riegelhaken (5) ausgebildet sind, daß die Rastelemente (11,12,15,16) aus fest mit dem die Riegelhaken (5) tragenden Rahmen (4) verbundenen, eine Zahnung aufweisenden Justierplatten (11,12) sowie aus mit einer gleichartigen Zahnung versehenen Feststellplatten (15,16) bestehen, wobei letztere eine in Verstellrichtung geringere Erstreckung aufweisen als die Justierplatten (11,12), daß die Justierplatten (11,12) jeweils auf Verriegelungsplatten (17) aufliegen, die die Ansätze (18-20) tragen, und daß die Rastelemente (11,12,15,16) über lösbare Verriegelelemente (21,22) an den Schienen (1) befestigbar sind.

2. Riegelelement nach Anspruch 1, dadurch gekennzeichnet, daß die Verriegelungselemente (21,22) als durch die Rastelemente (11,12,15,16) sowie die Verriegelungsplatten (17) sich hindurch in das Schienenprofil erstreckende Schraubenbolzen ausgebildet sind, deren Köpfe durch eine Drehbewegung unter das Profil der Schienen (1) bringbar sind.

3. Riegelelement nach Anspruch 1 oder 2, dadurch gekennzeichnet, daß die Schienen (1) im Oberdeck eines vom Passagier- auf den Frachtbetrieb umrüstbaren Verkehrsflugzeuges angeordnete Sitzschienen sind.

## Claims

1. Latching element (2) for locking items of freight in a freight-loading system for aircraft, which is held releasably on rails (1) extending in the longitudinal direction of the aeroplane floor and provided with a pattern of openings and in which at least one locking element (5) is disposed in a frame (4) which can be fixed by way of projections (18-20) in the pattern of openings of two rails (1) located at a spacing from one another, wherein the frame (4) is movably guided relative to the projections (18-20) and can be brought into engagement therewith in a force-locking manner in different, defined positions by way of detent elements (11,12,15,16), characterised in that the locking elements are constructed as latching hooks (5), that the detent elements (11,12,15,16), consist of adjustment plates (11,12), which are firmly connected to the frame (4) bearing the latching hooks (5) and are provided with teeth, and of fixing plates (15,16) provided with similar teeth, the said fixing plates having a lesser extent than the adjustment plates (11,12) in the adjustment direction, that the adjustment plates (11,12) each rest on locking plates (17) which bear the projections (18-20), and that the detent elements (11,12,15,16) can be fixed on the rails (1) by way of releasable locking elements (21,22).

2. Latching element according to claim 1, characterised in that the locking elements (21,22) are constructed as bolts which extend through the detent elements (11,12,15,16) and the locking plates (17) into the profile, the heads of the said bolts being capable of being brought under the profile of the rails (1) by a rotary movement.

3. Latching element according to claim 1 or 2, characterised in that the rails (1) are seat rails disposed in the upper deck of a commercial aeroplane which can be converted from passenger to freight operation.

## Revendications

1. Elément de verrou (2) pour arrimer des charges dans un système de chargement d'avion, monté de manière amovible sur des rails (1) dirigés suivant la direction longitudinale de l'avion, appartenant au plancher et comportant une trame de trous, au moins un élément d'arrimage (5) étant prévu dans un cadre (4) qui se fixe par des talons (18-20) dans la trame à trous de deux rails (1) écartés l'un de l'autre, le cadre (2) étant guidé de manière coulissante par rapport aux talons (18-20) et pouvant être mis en prise par des éléments d'encliquetage (11, 12, 15, 16) par une liaison par la force, dans des positions définies différentes, élément caractérisé en ce que les éléments d'arrimage sont réalisés sous la forme de crochets de verrou (5), les éléments d'accrochage (11, 12, 15, 16) se composant de plaques d'ajustement (11, 12) reliées solidairement au cadre (4) qui porte les crochets de verrou (5) et sont munis de dents, ainsi que de plaques de fixation (15, 16) munies de dents de même type, ces dernières plaques ayant une dimension plus petite dans la direction de réglage que les plaques d'ajustement (11, 12), et ces plaques d'ajustement (11, 12) reposent respectivement sur des plaques de verrouillage (17) qui portent les talons (18, 20), les éléments d'accrochage (11, 12, 15, 16) étant fixés aux rails (1) par des éléments de verrouillage (21, 22) amovibles.

2. Elément de verrou selon la revendication 1, caractérisé en ce que les éléments de verrouillage (21, 22) sont formés par des boulons qui traversent les éléments d'accrochage (11, 12, 15, 16) ainsi que les plaques de verrouillage (17) et traversent le profilé des rails, les têtes des boulons passant sous le profilé des rails (1) par un mouvement de rotation.

3. Elément de verrou selon la revendication 1 ou 2, caractérisé en ce que les rails (1) sont les rails de fixation des sièges du plancher d'un avion de transport transformable entre le transport de passagers et le transport de fret.
